# EUROPÄISCHE PATENTSCHRIFT

(11) **EP 1 029 723 B1**
(45) Veröffentlichungstag und Bekanntmachung des Hinweises auf die Patenterteilung: **21.05.2003**
(21) Anmeldenummer: 00103040.2
(22) Anmeldetag: 15.02.2000
(51) Int. Cl.: B60H 1/22

(54) **Luftansaugeinrichtung für Heizgerät mit Wasserabscheider**
Air intake device for a heating device with water separator
Dispositif d'aspiration d'air pour un dispositif de chauffage avec séparateur d'eau

(30) Priorität: 20.02.1999 DE 19907264
(43) Veröffentlichungstag der Anmeldung: 23.08.2000
(73) Patentinhaber: Webasto Thermosysteme International GmbH, 82131 Stockdorf (DE)
(72) Erfinder: Waronitza, Josef, 85235 Unterumbach (DE); Kauschke, Hansjörg, 82041 Deisenhofen (DE); Walther, Michael, 82110 Germering (DE); Schattat, Tilman, 81377 München (DE); Zimmermann, Werner, 82194 Gröbenzell (DE)
(74) Vertreter: Wiese, Gerhard

(56) Entgegenhaltungen:
- DE-A- 1 480 406
- DE-A- 2 200 796
- JP-A- 1 030 827
- US-A- 4 530 658

## Beschreibung

Die Erfindung betrifft eine Luftansaugeinrichtung für ein Heizgerät, insbesondere Fahrzeug-Heizgerät, gemäß dem Oberbegriff des Patentanspruchs 1, wie sie aus US-A- 4 530 658 bekannt ist.

Eine weitere Luftansaugeinrichtung mit einem Schalldämpfer ist aus der DE-A1 1 480 406 bekannt. Dieser in der Luftzuleitung von Kraftfahrzeugen liegende Schalldämpfer hat jedoch den Nachteil, daß in der angesaugten Luft vorhandene. Feuchtigkeit bzw. Wasser ungehindert mit angesaugt wird und den Betrieb des ansaugenden Aggregats des Fahrzeugs beeinträchtigen kann.

Ein ähnlich aufgebauter Luftansaugeinrichtung mit einem Schalldämpfer ist aus der DE-22 00 796 B2 bekannt und weist einen schalldämpfenden Körper auf, der in Gestalt eines Labyrinths gestaltet ist, so daß in ihm in der angesaugten Luft mitgeführte Feuchtigkeit bzw. mitgeführtes Wasser zumindest teilweise zurückgehalten wird. Nachteilig ist dabei jedoch, daß das schalldämpfende Material die Feuchtigkeit aufnimmt und seine Eigenschaften dadurch ändert. Außerdem sind keine Maßnahmen getroffen, ein Übermaß von Feuchtigkeit bzw. Wasser abzuleiten, so daß die Gefahr besteht, daß dieser Schalldämpfer mit Feuchtigkeit zugesetzt und diese schließlich doch in das nachgeschaltete Aggregat gesaugt wird.

Die Aufgabe der vorliegenden Erfindung besteht darin, einen Luftansaugeinrichtung zu schaffen, der eine sichere Abscheidung von Feuchtigkeit bzw. Wasser in der angesaugten Luft gewährleistet.

Gelöst wird diese Aufgabe durch die kennzeichnenden Merkmale des Anspruchs 1. Vorteilhafte Weiterbildungen der Erfindung sind in den Unteransprüchen angegeben.

Demnach ist erfindungsgemäß dem Luftansaugstutzen eines Fahrzeug-Heizgeräts ein Wasserabscheider vorgeschaltet, der eine Wasserabscheider-Kammer mit zumindest einer Luftansaug-Öffnung umfaßt, die in ihrer Wandung seitlich versetzt zum Einlaßstutzen angeordnet und von diesem durch eine Prallwand getrennt ist. Dadurch wird erreicht, daß Feuchtigkeit bzw. Wasser in der angesaugten Luft, bevor diese in das Heizgerät oder einen vorgeschalteten Schalldämpfer eintritt, an der Prallwand abgeschieden wird und durch die Luftansaug-Öffnung in der Wasserabscheider-Kammer entweichen kann, so daß mit Sicherheit gewährleistet ist, daß keine Feuchtigkeit bzw. Wasser in den Schalldämpfer und das nachgeschaltete Aggregat gelangt

Grundsätzlich kann die Anordnung aus Ansaugstutzen und Wasserabscheider-Kammer der erfindungsgemäßen Luftansaugeinrichtung in beliebiger Art gestaltet sein. Eine bevorzugte Geometrie ist jedoch die Zylinderform, bei der bei Vorhandensein einer Schalldämpferkammer beide Kammern zylinderförmig gebildet und axial miteinander verbunden sind, wobei Ein- und Auslässe der Schalldämpfer-Kammer bzw. der Einlaßstutzen zumindest im wesentlichen entlang der Längsmittenlinie der zylindrischen Anordnung verlaufen.

Vorteilhafterweise sind mehrere Luftansaug-Öffnungen in zumindest einer Radialebene der zylindrischen Wasserabscheider-Kammer angeordnet und die jeder Luftansaug-Öffnung zugeordnete Prallwand bildet einen durchbruchfreien Abschnitt einer in dieser Radialebene liegenden Ringwand, die koaxial zur Längsmittenachse der zylindrischen Kammeranordnung verläuft, und einen kleineren Durchmesser als die Wasserabscheider-Kammer aufweist, wobei der durchbruchfreie Prallwandabschnitt der Ringwand eine axiale und radiale Erstreckung hat, die in etwa der axialen und radialen Erstreckung der Luftansaug-Öffnungen entspricht.

Um den Strömungswiderstand der angesaugten Luft durch den zylindrischen Wasserabscheider zu verringern, ist vorteilhafterweise vorgesehen, daß die mit Prallwandabschnitten versehenen Ringwände außerhalb der Prallwandabschnitte Durchbruchabschnitte aufweisen, die bezogen auf die Luftansaug-Öffnungen der Wasserabscheider-Kammer in Umfangsrichtung versetzt sind, um keinen unmittelbaren Durchtritt von Luft durch die Luftansaug-Öffnungen im Mantel der Wasserabscheider-Kammer zu erlauben.

Um den Strömungswiderstand bei Luftansaugung im zylindrischen Wasserabscheider zu erniedrigen, kann außerdem vorteilhafterweise vorgesehen sein, daß zumindest eine zur ersten Anordnung aus Luftansaug-Öffnungen axial versetzte, in einer gemeinsamen Radialebene liegende zweite Anordnung aus Luftansaug-Öffnungen und Ringwand mit Prallwandabschnitten vorgesehen ist.

Im Fall der vorteilhaften zweifachen ineinander geschachtelten Anordnung aus Luftansaug-Öffnungen/Ringwänden ist das freie Ende des Einlaßstutzen der Schalldämpfer-Kammer vorteilhafterweise zwischen diesen beiden Anordnungen auf Höhe eines durchbrechungsfreien Ringabschnitts des zylindrischen Mantels der Wasserabscheider-Kammer angeordnet.

Nachfolgend wird die Erfindung anhand der Zeichnung beispielhaft näher erläutert; es zeigen:
- Fig. 1: eine Seitenaufrißansicht einer Ausführungsform der erfindungsgemäßen Luftansaugeinrichtung in Verbindung mit einem nachgeschalteten Schalldämpfer,
- Fig. 2: eine Schnittansicht entlang der Linie D-D in Pfeilrichtung gesehen, und
- Fig. 3: ein Fahrzeug- Heizgerät mit einem Wasserabscheider ohne zwischengeschalteten Schalldämpfer.

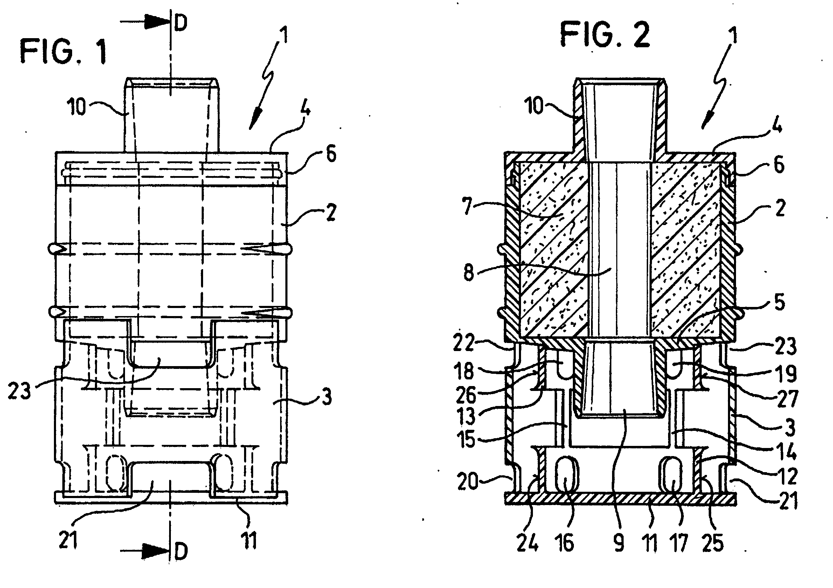

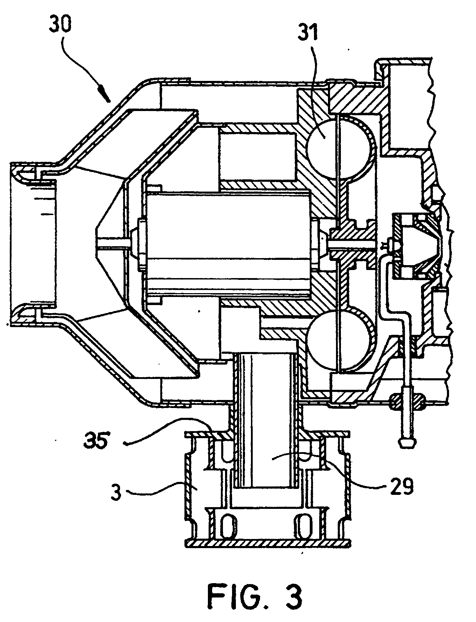

Die in Fig. 1 und 2 gezeigte, als Luftansaug-Schalldämpfer ausgebildete Luftansaugeinrichtung 1 zur Verbindung mit einem Fahrzeug- Heizgerät (siehe Fig. 3) bildet insgesamt einen zylindrischen Körper, der axial aufeinanderfolgend zwei Funktionsteile hat, nämlich einen als Schalldämpfer fungierenden Teil und einen als Wasserabscheider fungierenden Teil, der dem Schalldämpfer in Strömungsrichtung der angesaugten Luft vorgeschaltet ist. Beide Funktionsteile des Luftansaug-Schalldämpfers 1 bestehen bevorzugt aus Kunststoff. Der Luftansaug-Schalldämpfer 1 umfaßt eine zylindrische Schalldämpfer-Kammer 2 und eine zylindrische topfförmige Wasserabscheider-Kammer 3.

Der Zylinderkörper der Schalldämpfer-Kammer 2 ist an beiden Stirnseiten durch scheibenförmige Verschlußteile verschlossen, nämlich durch einen Deckel 4 bzw. durch einen Boden 5. Bei der dargestellten Ausführungsform ist der Boden 5 einstückig mit dem zylindrischen Körper der Schalldämpfer-Kammer 2 gebildet, während der Deckel 4 mit einem zum Boden 5 weisenden Ringrand 6 versehen ist, der den oberen Rand der zylindrischen Wandung der Schalldämpfer-Kammer übergreift und beispielsweise durch einen Preßsitz oder eine Rastverbindung mit dieser verbunden ist.

Der Deckel 4 ist damit vom Zylinderkörper der Schalldämpfer-Kammer 2 lösbar, um ein Schalldämpferelement 7 in die Schalldämpfer-Kammer 2 einsetzen zu können und gegebenenfalls gegen ein neues Schalldämpferelement 7 austauschen zu können. Das Schalldämpferelement 7 besteht beispielsweise aus einem zylindrischen Schaumstoffkörper mit einer zentralen Bohrung 8, dessen Außenumfang formschlüssig im Kontakt mit dem Innenumfang der Schalldämpfer-Kammer 2 steht.

Axial fluchtend mit der Bohrung 8 sind der Boden 5 bzw. Deckel 4 mit einem Einlaßstutzen 9 bzw. einem Auslaßstutzen 10 versehen. Einlaßstutzen 9 und Auslaßstutzen 10 weisen dieselbe Form auf mit einem zylindrischem Außenumfang und einer sich leicht konisch zum Außenrand hin erweiternden Innenumfangswand. Beide Stutzen 9, 10 sind einstückig mit dem Deckel 4 bzw. dem Boden 5 gebildet. Der Auslaßstutzen 10 dient beispielsweise zum Anschluß an die Luftansaug-Öffnung eines Fahrzeugheizgeräts.

Bei einer anderen in Fig. 3 dargestellten Ausführungsform ohne einen Schalldämpfer ist die erfindungsgemäße Wasserabscheideeinrichtung unmittelbar - wie gezeigt - oder unter Zwischenschaltung eines Verlängerungsrohres oder -schlauches an einem Einlaßstutzen 29 eines Fahrzeug-Heizgeräts 30 angeordnet. Der Einlaßstutzen 29 ist mit einem Brennluftgebläse 31 verbunden, welches Brennluft in eine nicht näher dargestellte Brennkammer fördert. Als stirnseitiger Abschluß der Wasserabscheideeinrichtung dient ein separater Boden 35.

Wenn im Einsatz über den Einlaßstutzen 9 durch die Bohrung 8 und den Auslaßstutzen 10 vom Heizgerät angesaugte Luft durch die Schalldämpfer-Kammer 2 tritt, wird ein mit diesem Ansaugvorgang verbundenes Ansauggeräusch durch das Material des Schalldämpferelements 7 in an sich bekannter Weise gedämpft.

An die Unterseite der Schalldämpfer-Kammer 2 schließt sich die Wasserabscheider-Kammer 3 an, die einen zylindrischen becherförmigen Teil bildet, der zur Anschlußseite an die Schalldämpfer-Kammer 2 offen ist und axial gegenüberliegend durch ein Bodenteil 11 verschlossen ist. Die Wasserabscheider-Kammer 3 ist aus einer äußeren Ringwand 13 und einer mit dem Bodenteil 11 verbundenen inneren Rindwand 12 zusammengesetzt. Der offene Ringrand der becherförmigen Wasserabscheider-Kammer 3 umgreift ähnlich wie der Deckel 4 die zylindrische Schalldämpfer-Kammer 2 und ist an dieser durch einen Preßsitz oder mittels einer Rastverbindung befestigt oder mit der Schalldämpfer-Kammer 2 verschraubt oder verklebt. Wenn in einer einfacheren Ausführungsform die Wasserabscheider-Kammer 3 ohne einen nachgeschalteten Schalldämpfer unmittelbar auf einen Ansaugstutzen eines Fahrzeugheizgeräts aufgesetzt wird, weist die Wasserabscheider-Kammer 3 auch auf der dem Bodenteil 11 gegenüberliegenden Stirnseite einen Deckel auf, der einen Durchbruch für eine dichte Anbindung am Ansaugstutzen aufweist.

Während der zylindrische Mantel der Schalldämpfer-Kammer 2 massiv, d.h. ohne Durchbrüche gebildet ist, weist die zylindrische becherförmige Wasserabscheider-Kammer 3 in ihrem zylindrischen Mantel mehrere Luftansaug-Durchbrüche (20, 21 bzw.-Ausnehmungen 22, 23) auf.

Wie insbesondere aus Fig. 2, jedoch auch aus Fig. 1 (dort strichliert dargestellt) hervorgeht, greift der Einlaßstutzen 9 der Schalldämpfer-Kammer 2 in die Wasserabscheider-Kammer 3 axial ungefähr bis zur halben Höhe dieser Kammer ein. Das heißt, der Außenrand des Einlaßstutzens 9 liegt in einer Radialebene der zylindrischen becherförmigen Wasserabscheider-Kammer 3, welche diese Kammer axial etwa in zwei gleiche Hälften unterteilt. Zu beiden Seiten dieser Ebene befinden sich in spiegelsymmetrischer Anordnung zwei Ringwände 12 und 13, die einen gleich großen Durchmesser aufweisen, der jeweils kleiner ist als der Durchmesser des Zylindermantels der Wasserabscheider-Kammer 3, so daß zwischen den Ringwänden 12 und 13 und diesem Mantel ein Ringraum verbleibt. Bei der dargestellten Ausführungsform ist die untere Ringwand 12 mit der Innenseite des Bodenteils 11 der Wasserabscheider-Kammer 3 fest verbunden und bevorzugt einstückig mit dieser gebildet. Die obere Ringwand 13 ist mit der unteren Ringwand 12 axial fluchtend über vier umfangsmäßig um 90° beabstandete axiale Stege verbunden, von denen in Fig. 2 aufgrund der Schnittdarstellung lediglich zwei Stege 14 und 15 dargestellt sind. Der zur Schalldämpfer-Kammer 2 weisende Ringrand der oberen Ringwand 13 liegt im zusammengebauten Zustand an der Außenseite des Bodens 5 der Schalldämpfer-Kammer 2 an.

In Verlängerung der vier axialen Stege 14 bzw.15 sind in der unteren Ringwand 12 vier Durchbrüche gebildet, von denen in Fig. 2 aufgrund der Schnittdarstellung wiederum zwei Durchbrüche 16 und 17 zu erkennen sind. Dementsprechend sind in der oberen Ringwand 13 ausgehend von deren freiem Ringrand vier Ausnehmungen gebildet, von denen in Fig. 2 zwei Ausnehmungen 18 und 19 zu erkennen sind. Bei miteinander verbundenen Schalldämper- bzw. Wasserabscheider-Kammem 2 bzw. 3 werden die Ausnehmungen 18, 19 in der oberen Ringwand 13 durch den anliegenden Boden 5 der Schalldämpfer-Kammer 2 an ihrem freien Rand verschlossen und bilden damit funktionsmäßig Durchbrüche ähnlich den Durchbrüchen 16 bzw. 17 in der unteren Ringwand 12. Wenn keine benachbarte Schalldämpfer- Kammer vorhanden ist, sondern der Wasserabscheider unmittelbar auf einem Ansaugstutzen eines Fahrzeug-Heizgeräts angeordnet ist, ist die oberer Stirnseite der Wasserabscheide-Kammer 3 mit einem eigenen scheibenförmigen Deckel verschlossen, der dann die Ausnehmungen 18 und 19 begrenzt.

Die weiter oben bereits erwähnten Luftansaug-Durchbrüche 20, 21 bzw. -Ausnehmungen 22, 23 im zylindrischen Mantel der Wasserabscheider-Kammer 3 liegen in denselben Radialebenen wie die untere Ringwand 12 bzw. die obere Ringwand 13. In jeder dieser Radialebene sind im zylindrischen Mantel der Wasserabscheider-Kammer 3 in den jeweiligen Radialebenen jeweils vier Luftansaug-Öffnungen gebildet, von denen in Fig. 1 bzw. in Fig. 2 zwei Luftansaug-Durchbrüche 20, 21 angrenzend an den Bodenteil 11 der Wasserabscheider-Kammer 3 und zwei durch den Bodenteil 5 zu Durchbrüchen ergänzte Ausnehmungen 22 und 23 zu erkennen sind. Die bodenteilseitigen Luitansaug-Durchbrüche 20, 21 sind umfangsmäßig jeweils um 90° versetzt angeordnet. Die entsprechenden Ausnehmungen 22, 23 am oberen Ringrand der Wasserabscheider-Kammer 3 weisen dieselbe Anordnungsgeometrie auf. Die Luftansaug-Durchbrüche 20, 21 bzw. -Ausnehmungen 22, 23 im Mantel der Wasserabscheider-Kammer 3 sind entlang derselben Mantellinien angeordnet. Bezogen auf Fig. 2 liegt demnach der Luftansaug-Durchbruch 20 auf derselben Mantellinie wie die Luftansaug-Ausnehmung 22 und der Luftansaug-Durchbruch 21 liegt auf derselben Mantellinie wie die Luftansaug-Ausnehmung 23, wobei diese beiden Mantellinien in Umfangsrichtung um 180° zueinander versetzt sind. Dasselbe gilt für die beiden in Fig. 2 nicht ersichtlichen Durchbruch-Ausnehmungspaare.

In bezug auf die Durchbrüche 16, 17 bzw. Ausnehmungen 18, 19 in den Ringwänden 12, 13 sind die Luftansaug-Durchbrüche 20, 21 und Luftansaug-Ausnehmungen 22, 23 im Mantel der Wasserabscheider-Kammer 3 um 45° relativ verdreht angeordnet. Demnach liegt in radialer Richtung von außen nach innen betrachtet, hinter jedem Luftansaug-Durchbruch, beispielsweise den Luftansaug-Durchbrüchen 20, 21 ein massiver, nicht perforierter Abschnitt der unteren Ringwand 12, während hinter jeder Luftansaug-Ausnehmung, beispielsweise den Luftansaug-Ausnehmungen 22, 23 ein nicht perforierter Abschnitt der oberen Ringwand 13 zu liegen kommt. Diese nicht perforierten Abschnitte der Ringwände 12, 13 bilden damit Prall- bzw. Strömungsleitwände 24 bis 27 für die durch die Luftansaug-Durchbrüche 20, 21 bzw. Ausnehmungen 22, 23 im Mantel der Wasserabscheider-Kammer 3 angesaugte Luft. Soweit diese Luft Feuchtigkeit mit sich führt, hat dies zur Folge, daß diese Feuchtigkeit an den Prallwänden 24 bis 27 aus dem angesaugten Luftstrom abgeschieden wird und durch die Durchbrüche bzw. Ausnehmungen wieder nach außen abfließen kann.

In ähnlicher Weise liegen die Durchbrüche bzw. Ausnehmungen in den Ringwänden 12, 13, beispielsweise die Durchbrüche 16, 17 und die Ausnehmungen 18, 19 in radialer Richtung von innen nach außen gesehen vor nicht perforierten Abschnitten des zylindrischen Mantels der Wasserabscheider-Kammer 3, so daß durch diese Durchbrüche 16, 17 bzw. Ausnehmungen 18, 19 in den Ringwänden 12, 13 Luft über die Luftansaug-Durchbrüche 20, 21 bzw. -Ausnehmungen 22, 23 im Mantel der Wasserabscheider-Kammer 3 nicht unmittelbar eingesaugt wird. Die Durchbrüche 16, 17 bzw. die Ausnehmungen 18, 19 in den Ringwänden 12, 13 sind für die Funktion des Wasserabscheiders nicht obligatorisch, sondern dienen lediglich zur Verringerung des Strömungswiderstands, der durch die Luftansaug-Durchbrüche 21, 22 bzw.-Ausnehmungen 22, 23 des Mantels der Wasserabscheider-Kammer 3 angesaugten Luft.

Aufgrund der axial mittigen Anordnung des einlaßseitigen Randes des Einlaßstutzens 9 in der Wasserabscheider-Kammer 3, wird durch den Einlaßstutzen 9 aus einem axialen Bereich der Wasserabscheider-Kammer 3 angesaugt, welchem in radialer Richtung ein durchgehend geschlossener ringförmiger Abschnitt des Mantels der zylindrischen Wasserabscheider-Kammer 3 gegenüberliegt, so daß Luft in den Einlaßstutzen 9 ausschließlich indirekt über die Luftansaug-Durchbrüche 20, 21 bzw. -Ausnehmungen 22, 23 in diesem Mantel, d.h. axial versetzt gegenüber dem freien Ringrand des Einlaßstutzens 9 in diesen strömt, und zwar über den Umweg der genannten Prallwandabschnitte der oberen bzw. unteren Ringwand 12, 13, d.h. nach Abscheiden von gegebenenfalls in der angesaugten Luft enthaltener Feuchtigkeit. Damit ist gewährleistet, daß kein Wasser in das dem Luftansaug-Schalldämpfer 1 nachgeordnete Heizgerät gesaugt wird.

Die Erfindung ist insbesondere für solche Fahrzeug-Heizgeräte geeignet, deren Luftansaugstutzen aufgrund der beengten Verhältnisse im Motorraum in einem durch Spritzwasser gefährdeten Bereich eines Fahrzeugs angeordnet werden muß.

Der labyrinthartige Weg, den die Ansaugluft durch die Wasserabscheide-Kammer 3 nehmen muß, bevor sie zum Ansaugstutzen 9 der Schalldämpferkammer 2 gelangt, gewährleistet, daß - unabhängig von der Einbaulage der Luftansaugeinrichtung - die Feuchtigkeit vom Eindringen in den eigentlichen Schalldämpfer bzw. den Ansaugstutzen eines Fahrzeug-Heizgeräts abgehalten wird. Das abgefangene Wasser wird über die Durchbrüche 16, 17, 20, 21 bzw. Ausnehmungen 18, 19, 22, 23 im Gehäuse der Wasserabscheide-Kammer 3 wieder an die Umgebung zurückgeleitet.

Bei der in Fig. 3 dargestellten Ausführungsform ohne einen Schalldämpfer ist die erfindungsgemäße Wasserabscheideeinrichtung unmittelbar - wie gezeigt - oder unter Zwischenschaltung eines Verlängerungsrohres oder -schlauches an einem Einlaßstutzen 29 eines Fahrzeug-Heizgeräts 30 angeordnet. Der Einlaßstutzen 29 ist mit einem Brennluftgebläse 31 verbunden, welches Brennluft in eine nicht näher dargestellte Brennkammer fördert. Als stirnseitiger Abschluß der Wasserabscheideeinrichtung dient ein separater Boden 35, da der Boden 5 des Schalldämpfers hier nicht zur Verfügung steht. Im übrigen sind alle Teile identisch mit der in den Figuren 1 und 2 gezeigten Wasserabscheideeinrichtung.

### Bezugszeichenliste

- 1: Luftansaugeinrichtung
- 2: Schalldämpfer-Kammer
- 3: Wasserabscheider-Kammer
- 4: Deckel
- 5: Boden
- 6: Ringrand
- 7: Schalldämpferelement
- 8: Bohrung
- 9: Einlaßstutzen
- 10: Auslaßstutzen
- 11: Bodenteil
- 12: untere Ringwand
- 13: obere Ringwand
- 14: Steg
- 15: Steg
- 16: Durchbruch
- 17: Durchbruch
- 18: Ausnehmung
- 19: Ausnehmung
- 20: Luftansaug-Durchbruch
- 21: Luftansaug-Durchbruch
- 22: Luftansaug-Ausnehmung
- 23: Luftansaug-Ausnehmung
- 24: Prallwandabschnitt
- 25: Prallwandabschnitt
- 26: Prallwandabschnitt
- 27: Prallwandabschnitt
- 29: Einlaßstutzen
- 30: Fahrzeug-Heizgerät
- 31: Brennluft-Gebläse

## Patentansprüche

1. Luftansaugeinrichtung (1) für ein Fahrzeug-Heizgerät mit einem Einlaßstutzen (9), **dadurch gekennzeichnet, daß** dem Einlaßstutzen (9) ein Wasserabscheider vorgeschaltet ist, der eine Wasserabscheider-Kammer (3) mit zumindest einer Luftansaug-Öffnung (20 bis 23) umfaßt, die in der Wandung der wasserabscheider-Kammer axial versetzt zum Einlaßstutzen (9) angeordnet und von diesem durch wenigstens eine Prallwand (24 bis 27) getrennt ist.

2. Luftansaugeinrichtung nach Anspruch 1, mit einer zylindrischen, dem Fahrzeug-Heizgerät vorgeschalteten Schalldämpfer-Kammer (2), deren Einlaßstutzen (9) bzw. Auslaßstutzen (10) mit ihrer Längsmittenachse fluchten, **dadurch gekennzeichnet, daß** die Wasserabscheider-Kammer (3) eine zylindrische Verlängerung der Schalldämpfer-Kammer (2) bildet.

3. Luftansaugeinrichtung nach Anspruch 1 oder 2, **dadurch gekennzeichnet, daß** mehrere Luftansaug-Öffnungen (20, 21; 22, 23) in der Mantelfläche der Wasserabscheider-Kammer (3) angeordnet sind und die jeweilige Prallwand (24 bis 27) einen durchbruchfreien Abschnitt einer Ringwand (12, 13) bildet, die einen kleineren Durchmesser als die Wasserabscheider-Kammer (3) aufweist, wobei der durchbruchfreie Abschnitt einer Prallwand (24 - 27) eine axiale und radiale Erstreckung hat, die zumindest der axialen und radialen Erstreckung der Luftansaug-Öffnungen (20 bis 23) entspricht.

4. Luftansaugeinrichtung nach Anspruch 3, **dadurch gekennzeichnet, daß** die Ringwände (12, 13) außerhalb der Prallwandabschnitte (24 bis 27) Durchbruchabschnitte (16 bis 19) aufweist, die bezogen auf die Luftansaug-Öffnungen (20 bis 23) der Wasserabscheider-Kammer (3) in Umfangsrichtung versetzt sind.

5. Luftansaugeinrichtung nach Anspruch 3 oder 4, **dadurch gekennzeichnet, daß** zumindest eine zu einer ersten Anordnung aus Luftansaug-Öffnungen (20, 21) und einer radial einwärts von diesen liegender Ringwand (12) mit Prallwandabschnitten (24, 25) axial versetzte, in einer gemeinsamen Radialebene liegende zweite Anordnung aus Luftansaug-Öffnungen (22, 23) und Ringwand (13) mit Prallwandabschnitten (26, 27) vorgesehen ist

6. Luftansaugeinrichtung nach Anspruch 5, **dadurch gekennzeichnet, daß** die beiden Anordnungen aus Luftansaug-Öffnungen (20 bis 23) und Ringwänden (12, 13) in den axialen Endbereichen der Wasserabscheider-Kammer (3) angeordnet sind.

7. Luftansaugeinrichtung nach Anspruch 5, **dadurch gekennzeichnet, daß** das freie Ende des Einlaßstutzens (9) zwischen den beiden Anordnungen aus Luftansaug-Öffnungen (20 bis 23) und Ringwänden (12, 13) auf Höhe eines durchbrechungsfreien Ringabschnitts des zylindrischen Mantels der Wasserabscheider-Kammer (3) endet.

8. Luftansaugeinrichtung nach einem der Ansprüche 1 bis 7, **dadurch gekennzeichnet, daß** zumindestens die Wasserabscheider-Kammer (3) aus Kunststoff besteht.

9. Luftansaugeinrichtung nach einem der Ansprüche 2 bis 8, **dadurch gekennzeichnet, daß** die Schalldämpfer-Kammer (2) mit der Wasserabscheider-Kammer (3) lösbar verbunden ist.

## Claims

1. Air intake means (1) for a vehicle heater with an inlet connection (9), **characterised in that** a water separator is located upstream of the inlet connection (9), the water separator having a water separator chamber (3) with at least one air intake opening (20 to 23), which is axially offset in the wall of the water separator chamber relative to the inlet connection (9) and is separated from the latter by at least one deflector wall (24 to 27).

2. Air intake means according to Claim 1, with a cylindrical silencer chamber (2) which is arranged upstream of the vehicle heater and the inlet connection (9) and outlet connection (10) of which are aligned with the longitudinal centre axis thereof, **characterised in that** the water separator chamber (3) forms a cylindrical extension of the silencer chamber (2).

3. Air intake means according to Claim 1 or 2, **characterised in that** a plurality of air intake openings (20, 21; 22, 23) is arranged in the circumferential surface of the water separator chamber (3), and the respective deflector wall (24 to 27) forms an uninterrupted section of an annular wall (12, 13), which has a smaller diameter than the water separator chamber (3), the uninterrupted section of a deflector wall (24 - 27) having an axial and radial extension which is at least equal to the axial and radial extension of the air intake openings (20 to 23).

4. Air intake means according to Claim 3, **characterised in that**, outside the deflector wall sections (24 to 27), the annular walls (12, 13) have open sections (16 to 19) which are offset in a circumferential direction relative to the air intake openings (20 to 23) of the water separator chamber (3).

5. Air intake means according to Claim 3 or 4, **characterised in that** there is at least a second set of air intake openings (22, 23) and an annular wall (13) with deflector wall sections (26, 27) arranged in a common radial plane and axially offset relative to a first set of air intake openings (20, 21) and an annular wall (12) with deflector wall sections (24, 25), which is arranged radially to the inside of these openings.

6. Air intake means according to Claim 5, **characterised in that** the two sets of air intake openings (20 to 23) and annular walls (12, 13) are located in the axial end areas of the water separator chamber (3).

7. Air intake means according to Claim 5, **characterised in that** the free end of the inlet connection (9) ends between the two sets of air intake openings (20 to 23) and annular walls (12, 13) at the level of an uninterrupted annular section of the cylindrical jacket of the water separator chamber (3).

8. Air intake means according to one of Claims 1 to 7, **characterised in that** at least the water separator chamber (3) is made of plastic.

9. Air intake means according to one of Claims 2 to 8, **characterised in that** the silencer chamber (2) is detachably connected to the water separator chamber (3).

## Revendications

1. Dispositif d'aspiration d'air (1) pour un dispositif de chauffage pour véhicule comprenant une tubulure d'admission (9), **caractérisé en ce qu'**un séparateur d'eau est monté en amont de la tubulure d'admission (9), qui comporte une chambre (3) de séparateur d'eau dotée d'au moins une ouverture d'aspiration d'air (20 à 23) qui est disposée dans la paroi de la chambre de séparateur d'eau en étant décalée axialement par rapport à la tubulure d'admission (9) et en étant séparée de cette dernière par au moins une paroi de réflexion (24 à 27).

2. Dispositif d'aspiration d'air selon la revendication 1, comprenant une chambre amortissant le bruit (2) cylindrique montée en amont du dispositif de chauffage, dont la tubulure d'admission (9) et la tubulure d'échappement (10) sont en alignement avec son axe médian longitudinal, **caractérisé en ce que** la chambre (3) de séparateur d'eau constitue un prolongement cylindrique de la chambre amortissant le bruit (2).

3. Dispositif d'aspiration d'air selon la revendication 1 ou 2, **caractérisé en ce que** plusieurs ouvertures d'aspiration d'air (20, 21 ; 22, 23) sont ménagées dans l'enveloppe de la chambre (3) de séparateur d'eau et chaque paroi de réflexion (24 à 27) forme un segment plein d'une paroi annulaire (12, 13) dont le diamètre est inférieur à celui de la chambre (3) de séparateur d'eau, sachant que le segment plein d'une paroi de réflexion (24-27) possède une étendue axiale et radiale qui correspond au moins à l'étendue axiale et radiale des ouvertures d'aspiration d'air (20 à 23).

4. Dispositif d'aspiration d'air selon la revendication 3, **caractérisé en ce que** les parois annulaires (12, 13) présentent en dehors des segments de paroi de réflexion (24 à 27) des segments à trous (16 à 19) qui sont décalés dans la direction du pourtour par rapport aux ouvertures d'aspiration d'air (20 à 23) de la chambre (3) de séparateur d'eau.

5. Dispositif d'aspiration d'air selon la revendication 3 ou 4, **caractérisé en ce qu'**est prévu au moins un deuxième dispositif composé d'ouvertures d'aspiration (22, 23) et d'une paroi annulaire (13) dotée de segments de paroi de réflexion (26, 27), qui est décalé axialement par rapport à un premier dispositif constitué d'ouvertures d'aspiration (20, 21) et d'une paroi annulaire (12) à segments de paroi de réflexion (24, 25) décalée radialement vers l'intérieur par rapport à ces ouvertures, et qui se situe dans le même plan radial.

6. Dispositif d'aspiration d'air selon la revendication 5, **caractérisé en ce que** les deux dispositifs composés d'ouvertures d'aspiration (20 à 23) et de parois annulaires (12, 13) sont situés dans les zones d'extrémité axiales de la chambre (3) de séparateur d'eau.

7. Dispositif d'aspiration d'air selon la revendication 5, **caractérisé en ce que** l'extrémité libre de la tubulure d'admission (9) se termine entre les deux dispositifs constitués d'ouvertures d'aspiration (20 à 23) et de parois annulaires (12, 13), à hauteur d'un segment annulaire plein de l'enveloppe cylindrique de la chambre (3) de séparateur d'eau.

8. Dispositif d'aspiration d'air selon l'une des revendications 1 à 7, **caractérisé en ce qu'**au moins la chambre (3) de séparateur d'eau est en matière plastique.

9. Dispositif d'aspiration d'air selon l'une des revendications 2 à 8, **caractérisé en ce que** la chambre amortissant le bruit (2) et la chambre (3) de séparateur d'eau sont assemblées de façon amovible.
